# EUROPEAN PATENT APPLICATION

(11) **EP 2 738 920 A2**
(43) Date of publication of application: **04.06.2014**
(21) Application number: 13193646.0
(22) Date of filing: 20.11.2013
(51) Int. Cl.: H02K 7/18, H02K 11/00

(54) **Rotating electric machine, engine, vehicle, and motorcycle**

(30) Priority: 30.11.2012 JP 2012262546
(71) Applicant: Yamaha Hatsudoki Kabushiki Kaisha, Iwata-shi, Shizuoka 438-8501 (JP)
(72) Inventor: FURUTA, Hideki, Shizuoka, 438-8501 (JP)
(74) Representative: Zimmermann, Tankred Klaus

(57) **Abstract**

[PROBLEM]

To provide a rotating electric machine suitable for use as a starter-generator of, particularly, a motorcycle engine, that achieves a size reduction by suppression of an increase in the axial dimension.

[SOLUTION]

On an inner circumferential surface of a peripheral wall of a rotor main body having a bottom-closed cylindrical shape, field permanent magnets are arranged along a circumferential direction. A stator is provided in the rotor main body. A magnetic-sensor permanent magnet is provided to the rotor main body. An armature winding of the stator is in the form of concentrated winding. A magnetic sensor unit including a magnetic sensor element configured to detect a change in magnetic fluxes of the magnetic-sensor permanent magnet is arranged such that the whole of the magnetic sensor unit is received within a space that is formed inside bridge-wire guide walls with respect to a radial direction.

## Description

### [TECHNICAL FIELD]

The present invention relates to a rotating electric machine, and particularly to a rotating electric machine suitable for use as a starter-generator of an engine of various types of vehicle including a motorcycle.

### [BACKGROUND ART]

Conventionally, an engine of a motorcycle, for example, has a rotating electric machine mounted to a crankshaft of the engine. The rotating electric machine serves as a starter-generator that, at a time of engine start, functions as a starter motor for rotating the crankshaft and thereby starting the engine while, after the engine start, functioning as a generator configured to be rotated by the crankshaft.

Particularly, as the starter-generator provided in the engine of the motorcycle, a rotating electric machine including a magnetic sensor unit for detecting the angle of rotation of a rotor and controlling the rotating electric machine is proposed in Japanese Patent Application Laid-Open No. 2002-199660, for example. In the rotating electric machine proposed therein, a rotor main body having a bottom-closed cylindrical shape has, in a central portion of a bottom wall thereof, a boss portion for coupling a crankshaft of an engine. A magnetic-sensor permanent magnet having a ring-like shape is arranged in an outer peripheral portion of the boss portion. A stator is mounted inside the rotor main body. The stator includes a plurality of teeth and windings wound on the teeth. The plurality of teeth, which extend radially from a core part of a cylindrical shape, are arranged at regular intervals along a circumferential direction.

Moreover, a magnetic sensor unit having a magnetic sensor element incorporated therein is fixed to the core part of the stator. The magnetic sensor unit includes an attachment portion for attaching this unit to the stator, and a sensor holder having the magnetic sensor element incorporated therein. The attachment portion is fixed to the core part of the stator with a bolt. The sensor holder is arranged in a space between the windings and the bottom wall of the rotor main body. Thus, the magnetic sensor element is arranged such that the magnetic sensor element is opposed to an outer circumferential surface of the magnetic-sensor permanent magnet with respect to the radial direction of the magnetic-sensor permanent magnet.

In the rotating electric machine including the magnetic sensor unit described above, the magnetic sensor element incorporated in the magnetic sensor unit detects the rotational position of the magnetic-sensor permanent magnet, and a signal of this detection is used to control the rotating electric machine.

### [PRIOR ART DOCUMENTS]

### [PATENT DOCUMENTS]

[Patent Document 1] Japanese Patent Application Laid-Open No. 2002-199660

### [SUMMARY OF THE INVENTION]

### [PROBLEMS TO BE SOLVED BY THE INVENTION]

Meanwhile, as much downsizing as possible has been desired in a starter-generator mounted to an engine of a vehicle that sees a strong demand for a size reduction, exemplified particularly by a motorcycle, whose component parts have to be arranged within a limited space under a restriction on a layout of the component part. Particularly, there is a demand that a size reduction be achieved by reducing the size in an axial dimension.

However, in a structure adopted by the rotating electric machine proposed in the above-mentioned document, the sensor holder of the magnetic sensor unit is arranged in the space between the bottom wall of the rotor main body and the windings of the stator. Such a structure has a difficulty in further reducing the axial dimension.

Under the technological background described above, there has been a demand for development of a rotating electric machine that is suitable for use as a starter-generator of an engine, and for example as a starter-generator mounted to a motorcycle engine having an idling stop function, and that achieves a size reduction by reducing the size in the axial dimension without complication of a structure.

The present invention is accomplished in view of the conventional problems described above, and an object of the present invention is to provide a rotating electric machine that is suitable for use particularly as a starter-generator mounted to a motorcycle engine and that achieves a size reduction by reducing the size in the axial dimension.

This and other objects and advantages of the present invention will become apparent from preferred embodiments which will be described later.

### [MEANS FOR SOLVING THE PROBLEMS]

Hereinafter, a configuration of a rotating electric machine according to the present invention will be described.

The rotating electric machine includes a rotor main body having a bottom-closed cylindrical shape, the rotor main body including a bottom wall having a disk-like shape, a peripheral wall, and a shaft-fixing boss portion, the bottom wall being configured to rotate around a rotation axis, the peripheral wall extending out from an outer circumferential edge of the bottom wall in an axial direction of the rotation axis, the shaft-fixing boss portion being provided in a central portion of the bottom wall and being concentric with the peripheral wall,

A field permanent magnet is provided on an inner circumferential surface of the peripheral wall of the rotor main body in such a manner that the polarity of a magnetic pole alternates along a circumferential direction. A stator is provided in the rotor main body. A magnetic-sensor permanent magnet is provided to the rotor main body. A magnetic sensor unit including a magnetic sensor element configured to detect a change in magnetic fluxes of the magnetic-sensor permanent magnet is provided.

The stator includes a plurality of teeth, a plurality of windings, and a bridge-wire guide wall, the plurality of teeth being arranged at regular intervals in the circumferential direction and extending from a core part having a cylindrical shape in a radial direction of the rotation axis, the plurality of windings being wound on the plurality of teeth in the form of concentrated winding, the bridge-wire guide wall extending out at the proximal side of each of the plurality of teeth in the axial direction of the rotation axis, the bridge-wire guide wall being configured to guide a bridge-wire of each of the plurality of windings.

The magnetic sensor unit is arranged in such a manner that the whole of the magnetic sensor unit is received within a space that is formed inside the bridge-wire guide wall with respect to the radial direction. In the present invention, the expression "the space that is formed inside the bridge-wire guide wall with respect to the radial direction" does not mean a space limited to a certain range in the axial direction that overlaps the bridge-wire guide wall with respect to the radial direction of the rotation axis. It should be construed to mean a space that is inside an imaginary cylindrical surface A with respect to the radial direction and that extends from the core part of the stator to the bottom wall of the rotor main body. Here, the imaginary cylindrical surface A passes through an end surface of the bridge-wire guide wall at the rotation axis side.

In the rotating electric machine, to achieve a further reduction in the axial dimension, it is preferable that the magnetic-sensor permanent magnet is arranged in contact with an inner circumferential surface of the bottom wall. Alternatively, it may be also acceptable that the magnetic-sensor permanent magnet is fitted to an outer circumferential surface of an end portion of the boss portion located most inward at the bottom wall side.

In a possible configuration, a magnetic-sensor permanent magnet magnetized in the radial direction is adopted as the magnetic-sensor permanent magnet, and the magnetic sensor element is arranged so as to overlap the magnetic-sensor permanent magnet with respect to the radial direction. In an alternative possible configuration, a magnetic-sensor permanent magnet magnetized in the axial direction is adopted as the magnetic-sensor permanent magnet, and the magnetic sensor element is arranged so as to overlap the magnetic-sensor permanent magnet with respect to the axial direction.

Preferably, the magnetic sensor unit includes: a magnetic sensor holder having a base, an attachment portion, and a magnetic sensor element mount, the attachment portion being provided integrally to both ends of the base, the magnetic sensor element mount being provided integrally with the base; a circuit board arranged in the base; and the magnetic sensor element mounted to the magnetic sensor element mount.

Preferably, the magnetic sensor element is arranged in a press-fitted state within the magnetic sensor element mount.

It is preferable that the magnetic sensor unit is fixed to the stator in such a manner that the base is in direct contact with the core part of the stator.

Preferably, the magnetic sensor unit includes a positioning projection that is formed on a core-part opposed surface of the magnetic sensor unit, the core part of the stator includes a positioning hole corresponding to the positioning projection, and the positioning projection is fitted into the positioning hole, to position the magnetic sensor unit relative to the core part.

Preferably, the attachment portion of the magnetic sensor unit is fixed to the core part of the stator by means of a fastening member.

It is preferable that the winding has three-phase winding of U, V, and W phases, and the magnetic sensor unit includes three magnetic sensor elements corresponding to the U, V, and W phases of the three-phase winding.

In a possible configuration, the base of the magnetic sensor unit has an arc-like shape extending along the bridge-wire guide wall, the magnetic sensor element mount is formed so as to extend out from the base in the axial direction, and three magnetic sensor elements are arranged in the magnetic sensor mount.

It is preferable that the base of the magnetic sensor unit has a slit for guiding a harness that is connected to the circuit board.

An annular permanent magnet that is magnetized in such a manner that the polarity of a magnetic pole alternates in the circumferential direction is adoptable as the magnetic-sensor permanent magnet.

The magnetic-sensor permanent magnet may include a plurality of permanent magnet pieces that are magnetized in such a manner that the polarity of a magnetic pole alternates in the circumferential direction.

Preferably, the magnetic sensor element is a Hall effect device.

The rotating electric machine, in which the rotor main body is directly coupled to a crankshaft of an engine, is suitably used as a starter-generator that functions as a starter motor of the engine for rotating the crankshaft at a time of engine start, and that functions as a generator configured to be rotated by the crankshaft after the engine start.

In another aspect of the present invention, an engine including the rotating electric machine and a vehicle including the engine, such as a motorcycle, are provided.

### [EFFECTS OF THE INVENTION]

The rotating electric machine according to the present invention includes: a rotor main body having a bottom-closed cylindrical shape, the rotor main body including a bottom wall having a disk-like shape, a peripheral wall, and a shaft-fixing boss portion, the bottom wall being configured to rotate around a rotation axis, the peripheral wall extending out from an outer circumferential edge of the bottom wall in an axial direction of the rotation axis, the shaft-fixing boss portion being provided in a central portion of the bottom wall and being concentric with the peripheral wall; a field permanent magnet provided on an inner circumferential surface of the peripheral wall of the rotor main body in such a manner that the polarity of a magnetic pole alternates along a circumferential direction; a stator provided in the rotor main body; a magnetic-sensor permanent magnet provided to the rotor main body; and a magnetic sensor unit including a magnetic sensor element configured to detect a change in magnetic fluxes of the magnetic-sensor permanent magnet. In this configuration, the stator includes a plurality of teeth and a plurality of windings, the plurality of teeth being arranged at regular intervals in the circumferential direction and extending from a core part having a cylindrical shape in a radial direction of the rotation axis, the plurality of windings being wound on the plurality of teeth in the form of concentrated winding. In this manner, in the rotating electric machine according to the present invention, the windings wound on the plurality of teeth of the stator are concentrated windings. In the rotating electric machine according to the present invention, therefore, the axial dimension can be reduced as compared with in a rotating electric machine having distributed windings.

The stator includes a bridge-wire guide wall extending out at the proximal side of each of the plurality of teeth in the axial direction of the rotation axis, the bridge-wire guide wall being configured to guide a bridge-wire of each of the plurality of windings. The magnetic sensor unit is arranged in such a manner that the whole of the magnetic sensor unit is received within a space that is formed inside the bridge-wire guide wall with respect to the radial direction. That is, the magnetic sensor unit is arranged in such a manner that the whole of the magnetic sensor unit is received within a space that is formed inside the bridge-wire guide wall with respect to the radial direction, and the magnetic sensor unit is not interposed between the windings of the stator and the bottom wall of the rotor main body having the bottom-closed cylindrical shape. This achieves a further reduction in the interval between the windings of the stator and the bottom wall of the rotor main body in addition to a size reduction in the axial dimension achieved by adoption of the concentrated winding. As a result, a further size reduction in the axial dimension is achieved in the rotating electric machine as a whole.

Since a size reduction in the axial dimension of the rotating electric machine is achieved as described above, a further improvement in the degree of freedom in mounting the rotating electric machine on a vehicle is obtained.

### [BRIEF DESCRIPTION OF THE DRAWINGS]

[FIG. 1] FIG. 1 is a partial cross-sectional view schematically showing a state where a rotating electric machine according to an embodiment of the present invention is mounted to an engine.
[FIG. 2] FIG. 2 is a vertical cross-sectional view of the rotating electric machine.
[FIG. 3] FIG. 3 is an overall perspective view of a rotor of the rotating electric machine, as seen from the engine side.
[FIG. 4] FIG. 4 is an overall perspective view of the rotor of the rotating electric machine as seen from the radiator side.
[FIG. 5] FIG. 5 is an overall perspective view schematically showing a stator of the rotating electric machine.
[FIG. 6] FIG. 6 is a perspective view showing the vicinity of a magnetic sensor unit of the rotating electric machine.
[FIG. 7] FIG. 7 is an explanatory diagram showing an outline configuration of the stator, as seen from the radiator side.
[FIG. 8] FIG. 8 is a vertical cross-sectional view of a rotating electric machine according to a second embodiment of the present invention.
[FIG. 9] FIG. 9 is a schematic diagram of a motorcycle (vehicle) installed with the rotating electric machine according to the present invention.

### [EMBODIMENTS FOR CARRYING OUT THE INVENTION]

In the following, the present invention will be described based on preferred embodiments with reference to the drawings.

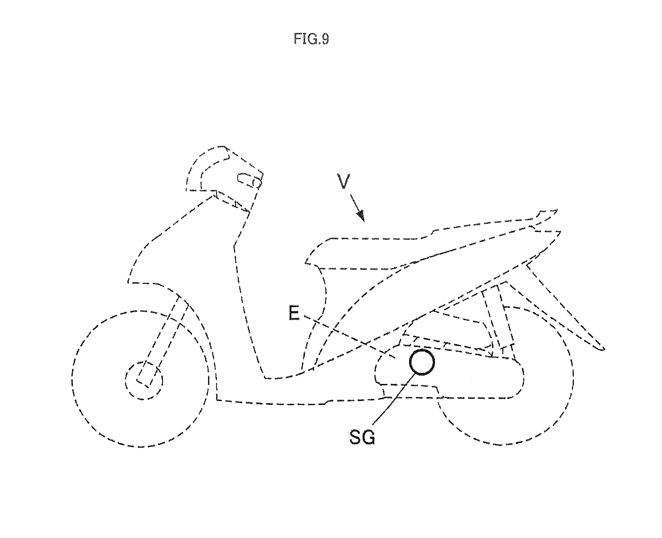

A rotating electric machine SG according to this embodiment is suitable for use as a starter-generator of various types of vehicles V (see FIG. 9) including, for example, a motorcycle provided with an engine having an idling stop function. The starter-generator is coupled to a crankshaft of an engine, and, at a time of engine start, functions as a starter motor for rotating the crankshaft and thereby starting the engine, while after the engine start, functioning as a generator configured to be rotated by the crankshaft. Needless to say, applications of the present invention are not limited to such a starter-generator for use in an engine having the idling stop function. The present invention is applicable to various types of rotating electric machines.

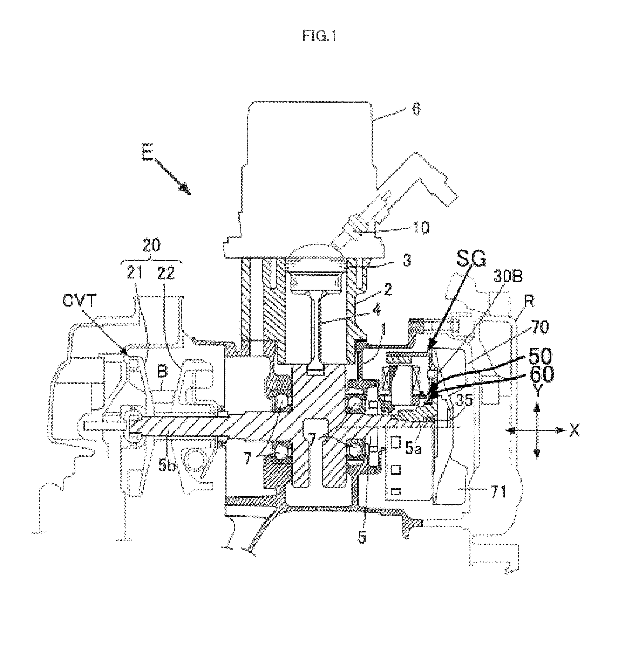

The rotating electric machine according to this embodiment is mounted in direct coupling with a crankshaft 5 of an engine E, as shown in FIG. 1. In the present invention, however, it is not an essential requirement that the rotating electric machine is mounted in direct coupling with the crankshaft 5 of the engine E. It may be also acceptable that, for example, the rotating electric machine is indirectly coupled to the crankshaft 5 of the engine with interposition of a speed reducer mechanism. The engine E includes a crankcase 1, a cylinder 2 provided to the crankcase 1, a piston 3 provided slidably within the cylinder 2, a connecting rod 4 having an upper end portion thereof coupled to the piston 3, and a crankshaft 5 provided rotatably within the crankcase 1 and coupled to a lower end portion of the connecting rod 4.

A cylinder head 6 is attached to the upper end of the cylinder 2. The crankshaft 5 is supported on the crankcase 1 in a freely rotatable manner via a pair of bearings 7, 7.

One end portion 5a (the right end portion in FIG. 1) of the crankshaft 5 extends and protrudes outward from the crankcase 1. The starter-generator SG is mounted to the one end portion 5a of the crankshaft 5. The starter-generator SG, at a time of engine start, functions as a starter motor for rotating the crankshaft 5 and thereby starting the engine E, while after the engine start, functioning as a generator configured to be rotated by the crankshaft 5. The starter-generator SG is included in a rotating electric machine of the present invention. A radiator R is arranged outside the starter-generator SG.

On the other hand, the other end portion 5b (the left end portion in FIG. 1) of the crankshaft 5 extends and protrudes outward from the crankcase 1. A primary pulley 20 of a continuously variable transmission CVT is attached to the other end portion 5b of the crankshaft 5. The primary pulley 20 includes a fixed sheave 21 and a movable sheave 22. The fixed sheave 21 is fixed to the distal end of the other end portion 5b of the crankshaft 5 such that the fixed sheave 21 rotates together with the crankshaft 5. The movable sheave 22 is splined to the other end portion 5b of the crankshaft 5. Accordingly, the movable sheave 22 is freely movable along an axial direction X. Thus, the movable sheave 22 rotates together with the crankshaft 5 with the interval between the movable sheave 22 and the fixed sheave 21 being variable. A belt B is wound around the primary pulley 20 and a secondary pulley (not shown), so that a rotational force of the crankshaft 5 is transmitted to a drive wheel (not shown) of the vehicle.

Although the engine E illustrated in this embodiment is structured as shown in FIG. 1, a specific configuration of a main body of the engine of the present invention is not limited to the illustrated embodiment.

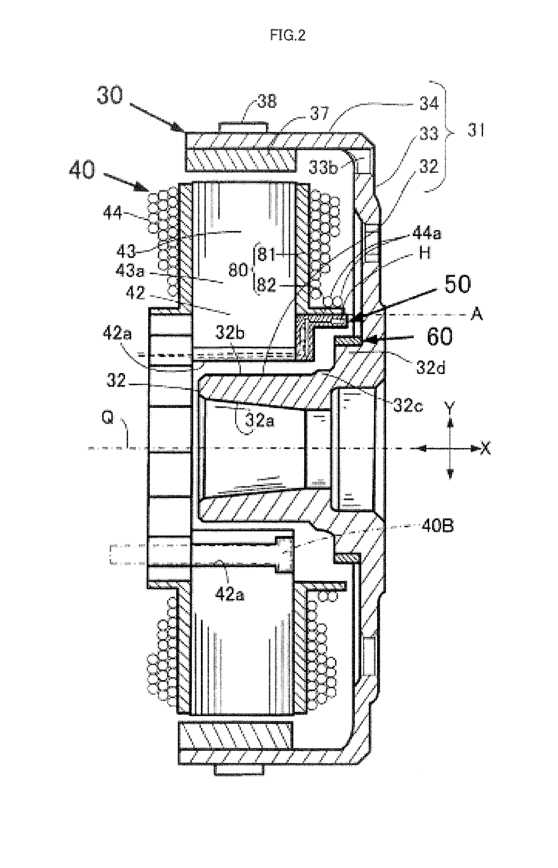

In the following, a detailed description will be given to a specific configuration of a rotating electric machine used as the starter-generator SG. As shown in FIG. 2, the rotating electric machine includes a rotor 30, a stator 40, a magnetic sensor unit 50, and a magnetic-sensor permanent magnet 60.

Referring to FIG. 2, the rotor 30 includes a rotor main body 31 and field permanent magnets 37 fixed to the rotor main body 31. The rotor main body 31 has a bottom-closed cylindrical shape made of, for example, a ferromagnetic material. The rotor main body 31 is configured to rotate around a rotation axis Q. The rotor main body 31 includes a shaft-fixing boss portion 32 having a cylindrical shape, a bottom wall 33 having a disk-like shape, and a peripheral wall 34 having a tube-like shape. The shaft-fixing boss portion 32 is fixed to the crankshaft 5 with the one end portion 5a of the crankshaft 5 being received within the shaft-fixing boss portion 32 itself. The bottom wall 33 is fixed to the boss portion 32, and extends in a radial direction Y of the crankshaft 5. The peripheral wall 34 extends in the axial direction X of the crankshaft 5 (toward the engine) from an outer circumferential edge of the bottom wall 33.

The bottom wall 33, the peripheral wall 34, and the boss portion 32 are integrally formed into a single piece made of a material including a ferromagnetic element. Instead of integrally forming them, for example, the boss portion 32 and the bottom wall 33 formed as separate members may be coupled and fixed to each other with a fastening member such as a bolt. The boss portion 32 has a tapered reception hole 32a that receives the one end portion 5a of the crankshaft 5 therein. The tapered reception hole 32a extends along the axial direction X of the crankshaft 5. The tapered reception hole 32a has a taper angle that corresponds to an outer circumferential surface of the one end portion 5a of the crankshaft 5. In a state where the one end portion 5a of the crankshaft 5 is received in the reception hole 32a, the outer circumferential surface of the one end portion 5a is fixed in tight contact with an inner circumferential surface of the reception hole 32a over the entire length thereof. Thereby, positioning of the boss portion 32 relative to the crankshaft 5 with respect to the axial direction X is made. Under a state where the one end portion 5a of the crankshaft 5 is received and arranged within the boss portion 32, a nut 35 is screwed onto a male thread that is formed at the distal end of the one end portion 5a of the crankshaft 5, as shown in FIG. 1. Thereby, the boss portion 32 is fastened and fixed to the crankshaft 5.

As shown in an enlarged view of FIG. 2, the boss portion 32 is configured such that the outer diameter thereof increases stepwise from its distal side (the engine side; the left side in FIG. 2) toward its proximal side (the radiator side; the right side in FIG. 2). That is, the boss portion 32 has a front small-diameter portion 32b, a first large-diameter portion 32c, and a second large-diameter portion 32d that are arranged in this order from the distal side (the engine side; the left side in FIG. 2) toward the proximal side (the radiator side; the right side in FIG. 2). A magnetic-sensor permanent magnet 60 having an annular shape, which will be described later, is fitted on an outer circumferential surface of the second large-diameter portion 32d. The disk-shaped bottom wall 33 provided integrally with the boss portion 32 extends in the radial direction Y from a proximal portion of the boss portion 32.

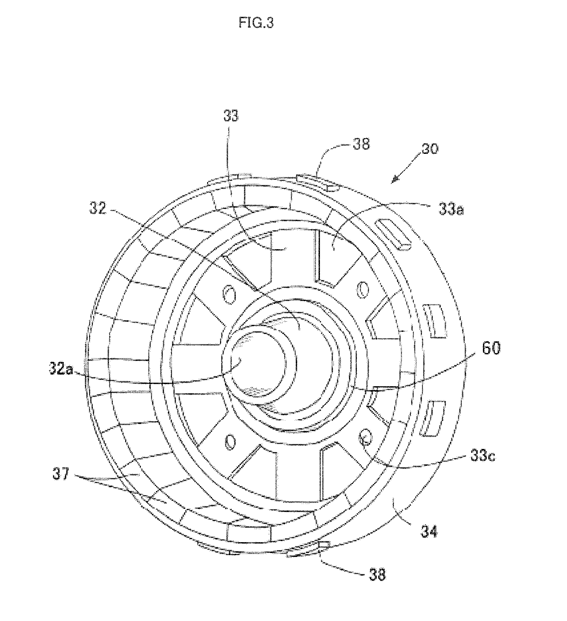

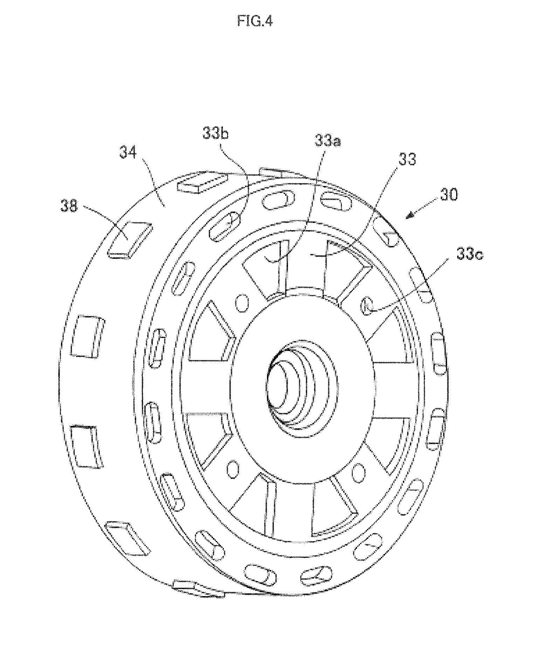

As shown in FIGS. 3 and 4, the bottom wall 33 has a plurality of vents 33a that are formed in a middle portion of the bottom wall 33 with respect to the radial direction Y and arranged along a circumferential direction. In this embodiment, eight vents 33a are formed. Moreover, a plurality of holes 33b arranged at predetermined intervals along the circumferential direction are formed in an outer peripheral portion of the bottom wall 33. Each of the holes 33b is formed in a position corresponding to the field permanent magnet 37 (see FIG. 2). Each of the holes 33b has an oval shape elongated along the circumferential direction. Since the bottom wall 33 has the plurality of vents 33a and the plurality of holes 33b as described above, heat generated in the rotor 30 and the stator 40 due to an iron loss and a copper loss does not stay within the rotor main body 31.

The bottom wall 33 also has four fan attaching holes 33c. Thus, as shown in FIG. 1, a cooling fan 70 is arranged on an outer circumferential surface of the bottom wall 33, and additionally bolts 30B are screwed into the fan attaching holes 33c. Thereby, the cooling fan 70 is fixed to the rotor main body 31. Accordingly, the cooling fan 70 is rotated along with rotation of the rotor main body 31, so that blades 71 of the cooling fan 70 forcibly discharge air existing within the rotor main body 31 to the radiator R side through the vents 33a and the holes 33b. Since a path for a cooling flow is provided in this manner, heat does not stay within the rotor main body 31, and the rotating electric machine is forcibly cooled. As a result, the magnetic sensor unit 50 which will be described later is cooled. This can prevent occurrence of an inconvenient situation in which a magnetic sensor element H including Hall effect devices, which is provided in the unit 50, reaches a high temperature so that the characteristics thereof deteriorates or a malfunction occurs.

The field permanent magnets 37 are fixed to an inner circumferential surface of the peripheral wall 34 of the rotor main body 31 in such a manner that the N pole and the S pole are alternately arranged with respect to the circumferential direction. For the permanent magnet 37, a magnet is suitably used that is obtained by mixing magnet power with a plastic resin, shaping a resultant into a cylindrical shape, caking a resultant, and then magnetizing a resultant in the radial direction Y of the crankshaft 5 such that, as described above, the magnetic pole changes with respect to the circumferential direction. For example, a neodymium bonded magnet is suitably used. It may be also acceptable that, instead of such a bonded magnet, a plurality of sintered magnet pieces are arranged in the circumferential direction. In the present invention, the type of the permanent magnet, the shape of the permanent magnet, the number of magnetic poles of the permanent magnet, and the like, are not limited to the ones illustrated in this embodiment.

As shown in FIGS. 3 and 4, the outer circumferential surface of the peripheral wall 34 of the rotor main body 31 has a plurality of projections 38 that are formed at regular intervals along the circumferential direction. The projection 38 is not formed in a part of the peripheral wall 34 with respect to the circumferential direction thereof. The presence of the projections 38 allow a sensor (not shown) to detect the rotational position of the rotor main body 31.

The rotor 30, which is directly coupled to the crankshaft 5 and rotatable together with the crankshaft 5 as described above, functions as a flywheel of the engine E, too.

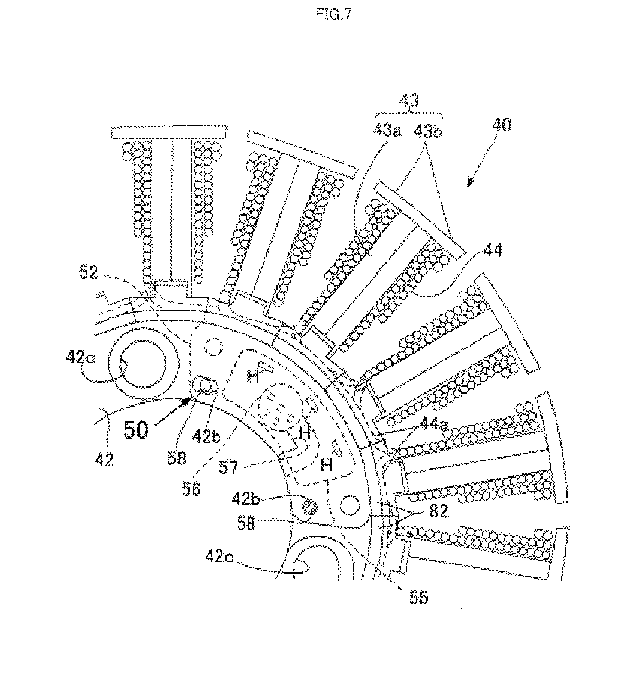

The stator 40 is obtained by, for example, this silicon steel plates being stacked in the axial direction. The stator 40 includes a core part 42 having a cylindrical shape, and a plurality of teeth 43 serving as salient poles (see FIG. 7). The core part 42 has, in its central portion, a hole 42a whose inner diameter is larger than the outer diameter of the tube-like shape boss portion 32 of the rotor 30, as shown in FIG. 2. The teeth 43 are configured to integrally extend radially outward from the core part 42. As shown in FIG. 7, the tooth 43 includes a main portion 43a and a pair of lateral protrusions 43b, 43b provided at the distal end of the main portion 43a. The lateral protrusions 43b, 43b are provided at both ends of the main portion 43a, and extend in the circumferential direction. The tooth 43 has an armature winding 44 wound around the main portion 43a.

The winding 44 is wound on the tooth 43 in the form of concentrated winding. The reason for adoption of the concentrated winding is as follows. For example, in a rotating electric machine used as a starter-generator of a motorcycle, the greatest possible size reduction is demanded. Meanwhile, there are a plurality of winding manners for winding an armature winding in the rotating electric machine. Particularly, in this type of rotating electric machine, adoption of the concentrated winding is increasing because it provides a higher efficiency of a winding operation and, because of its shorter winding length, provides downsizing of an end winding portion, as compared with distributed winding. Here, the distributed winding means that windings of respective phases are distributed among a plurality of slots, whereas the concentrated winding means that windings of respective phases are wound on a single slot.

Thus, adopting the concentrated winding as a manner of winding the armature winding 44 as illustrated in this embodiment is advantageous in that the axial dimension of a crank can be reduced.

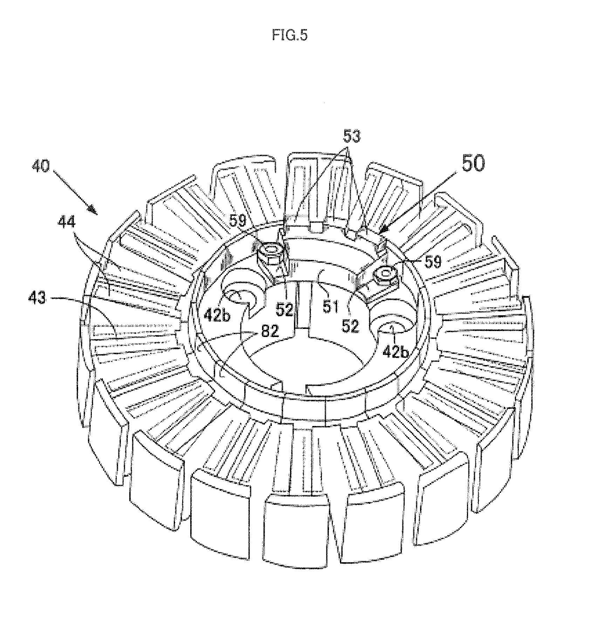

As shown in FIG. 2, the winding 44 of each phase is wound around an insulating member 80 made of an insulating material such as plastic. The insulating member 80 is arranged around the tooth 43. The insulating member 80 includes a tubular main body 81 and a bridge-wire guide wall 82. The tubular main body 81 covers the circumference of the main portion 43a of the tooth 43. The bridge-wire guide wall 82 extends out in the axial direction X from the end of the tubular main body 81 at the rotation axis side. Therefore, as shown in FIGS. 5 to 7, the bridge-wire guide walls 82 of a plurality of insulating members 80 are arranged along the circumferential direction of the rotor main body 31, to form a peripheral wall having a cylindrical shape. An end portion of the peripheral wall with respect to the axial direction X protrudes in the axial direction X beyond an outer peripheral surface of the winding 44 that most greatly protrudes in the axial direction X, as shown in FIG. 2.

As shown in FIGS. 2, 6, and 7, the bridge-wire 44a of the winding 44, which is wound on an outer circumferential surface of the tubular main body 81 of the insulating member 80, is arranged along the peripheral wall that is constituted of the bridge-wire guide walls 82 of the insulating members 80.

The conventional rotating electric machine described in BACKGROUND ART above adopts the structure in which the sensor holder of the magnetic sensor unit is arranged in a space between the bottom wall of the rotor main body and the winding of the stator. However, such a conventional structure makes it necessary that a gap for arranging the sensor holder is ensured between the bottom wall of the rotor main body and the winding of the stator. Since a predetermined interval has to be ensured between the rotor main body and the winding of the stator, it is difficult to further reduce the axial dimension of the rotating electric machine. To solve such a problem of the conventional technique, the present invention devises an attachment structure for attaching the magnetic-sensor permanent magnet and the magnetic sensor unit, thereby achieving a further size reduction in the axial direction in addition to the size reduction in the axial direction achieved by adoption of the concentrated winding. In the following, a specific description will be given to the attachment structure.

As described above, the magnetic-sensor permanent magnet 60 has an annular shape, and fitted on and fixed to the outer circumferential surface of the second large-diameter portion 32d of the tube-like shape boss portion 32 of the rotor main body 31. The magnetic-sensor permanent magnet 60 is arranged such that its end surface at the radiator side (the right end surface in FIG. 2) is in contact with the bottom wall 33 of the rotor main body 31. In other words, the magnetic-sensor permanent magnet 60 is fitted to the outer circumferential surface of an end portion of the boss portion 32 that is most inward at the bottom wall side, and in this condition, fixed while being in contact with the inner circumferential surface of the bottom wall 33. Since the magnetic-sensor permanent magnet 60 is arranged in the most inward portion of the rotor main body 31 having the bottom-closed cylindrical shape, a size reduction of the rotating electric machine with respect to the axial direction is achieved as compared with a case where the magnetic-sensor permanent magnet 60 is arranged in a middle portion of the boss portion 32 with respect to the axial direction X.

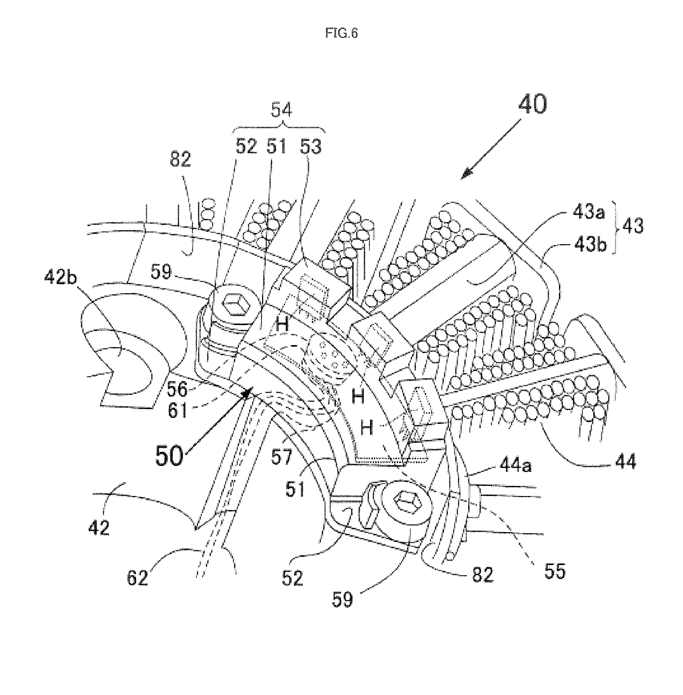

As shown in FIG. 6, the magnetic sensor unit 50 includes a plurality of Hall effect devices H serving as magnetic sensors provided in a magnetic sensor holder 54 having a substantially arc-like shape in a plan view. To be more specific, the magnetic sensor holder 54 is integrally formed as a single piece, which is made of an insulating material such as a synthetic resin. The magnetic sensor holder 54 includes a base 51, a pair of attachment portions 52, and three magnetic sensor element mounts 53. The base 51 has, in a plan view, an arc-like shape extending along the cylindrical peripheral wall constituted of the bridge-wire guide walls 82 of the insulating members 80. The pair of attachment portions 52 are provided integrally to both ends of the base 51. The three magnetic sensor element mounts 53 are provided so as to protrude from the base 51 in the axial direction X. The Hall effect device H serving as the magnetic sensor element is arranged in a press-fitted state within each of the magnetic sensor element mounts 53.

A circuit board 55 to which terminals of the Hall effect devices H are electrically connected is provided in the base 51. The circuit board 55 has a coupler 56 that is electrically connected to a printed circuit (not shown) formed on the circuit board 55. An adaptor 61 is detachably connected to the coupler 56. The adaptor 61 is connected to a front end of a signal wire (harness) 62.

As shown in FIGS. 6 and 7, the base 51 has a slit 57 for guiding the signal wire (harness) 62 connected to the adaptor 61. Accordingly, a signal of each of the Hall effect devices H is extracted to the outside through the circuit board 55, the coupler 56 connected to the circuit board 55, the adaptor 61 connected to the coupler 56, and the signal wire (harness) 62 connected to the adaptor 61. The three magnetic sensor elements H are arranged at regular intervals in the circumferential direction such that the three magnetic sensor elements H correspond to U-phase, V-phase, and W-phase of the winding 44, which form three-phase winding.

As shown in FIG. 7, the magnetic sensor holder 54 has a pair of positioning projections 58, 58 that are formed on a core-part opposed surface of the attachment portion 52. The core part 42 of the stator 40 has a pair of positioning holes 42b, 42b corresponding to the positioning projections 58, 58, respectively. One of the pair of positioning holes 42b, 42b has an elongated shape to enables the position of attachment to be adjusted with respect to the circumferential direction. As shown in FIG. 6, bolts 59, 59 penetrate through both end portions of the attachment portion 52 with respect to the circumferential direction, so that the attachment portion 52 is fastened and fixed to the core part 42 of the stator 40.

As described above, the stator 40 having the magnetic sensor unit 50 fixed thereto is fastened and fixed to the crankcase 1 of the engine E with bolts 40B (see FIG. 2) that pass through attachment holes 42c formed in the core part 42. That is, the magnetic sensor unit 50 is arranged between neighboring attachment holes 42c, and in this condition, directly fixed to the core part 42 of the stator 40 with the bolts 59, 59.

In a state where the sensor unit 50 is attached to the stator 40 as described above, each Hall effect device H serving as the magnetic sensor element is arranged outside the magnetic-sensor permanent magnet 60 with respect to the radial direction Y, as shown in FIG. 2. That is, each Hall effect device H is arranged so as to overlap the magnetic-sensor permanent magnet 60 with respect to the radial direction Y. Accordingly, when the magnetic-sensor permanent magnet 60 rotates, the Hall effect devices H detect a change in magnetic fluxes in the radial direction Y caused by the rotation of the magnetic-sensor permanent magnet 60. Signals outputted from the Hall effect devices H are inputted to a control circuit (not shown), and used for a control of the rotating electric machine. In this embodiment, as described above, the Hall effect device H serving as the magnetic sensor is arranged so as to overlap the magnetic-sensor permanent magnet 60 with respect to the radial direction Y. However, it suffices that the Hall effect device H is able to detect a change in the magnetic fluxes of the magnetic-sensor permanent magnet 60, and it is not always necessary that the Hall effect device H is arranged in a position overlapping the magnetic-sensor permanent magnet 60 with respect to the radial direction Y.

In this manner, the magnetic sensor unit 50 is wholly received within a space located inside the bridge-wire guide walls 82 of the insulating members 80 with respect to the radial direction Y. In other words, as shown in FIG. 2, the magnetic sensor unit 50 is arranged such that the whole of the magnetic sensor unit 50 is completely received within a space enclosed by the bridge-wire guide walls 82 of the insulating members 80, the core part 42 of the stator 40, and the boss portion 32 and the bottom wall 33 of the rotor. That is, the magnetic sensor unit 50 is arranged such that any part thereof is not outside the bridge-wire guide walls 82 of the insulating members 80 with respect to the radial direction Y.

The magnetic sensor unit 50 is arranged in the above-described manner, and any part of the magnetic sensor unit 50 is not interposed in a gap between the outer peripheral surface of the winding 44 with respect to the axial direction X (in the right direction in FIG. 2) and the inner circumferential surface of the bottom wall 33 of the rotor 30. Accordingly, the stator 40 and the bottom wall 33 of the rotor 30 can be arranged with an interval therebetween being further reduced. This enables the rotating electric machine to achieve a further size reduction in the axial direction X combined with the size reduction obtained by adoption of the concentrated winding.

In short, the present invention makes an effective use of a space that is formed between the bridge-wire guide walls 82 and the boss portion 32 at a location inside the bridge-wire guide wall 82 with respect to the radial direction Y, thereby achieving a reduction in the dimension of the rotating electric machine with respect to the axial direction X. Therefore, it suffices that the magnetic sensor unit 50 is arranged such that the whole of the magnetic sensor unit is received within the space that is formed inside the bridge-wire guide wall 82 with respect to the radial direction Y. As long as the magnetic sensor unit 50 is arranged in the above-described manner, no limitation is put on the number of the magnetic-sensor permanent magnets 60, the shape, the type, the arrangement position, the arrangement direction, or the like, of the magnetic-sensor permanent magnet 60. Likewise, no limitation is put on the number of the magnetic sensor units 50, the shape, the type, the arrangement position, the arrangement direction, or the like, of the magnetic sensor unit 50.

Setting a smaller dimension as the dimensions of the magnetic sensor unit 50 and/or the magnetic-sensor permanent magnet 60 with respect to the axial direction X can further reduce the dimension of the rotating electric machine with respect to the axial direction X.

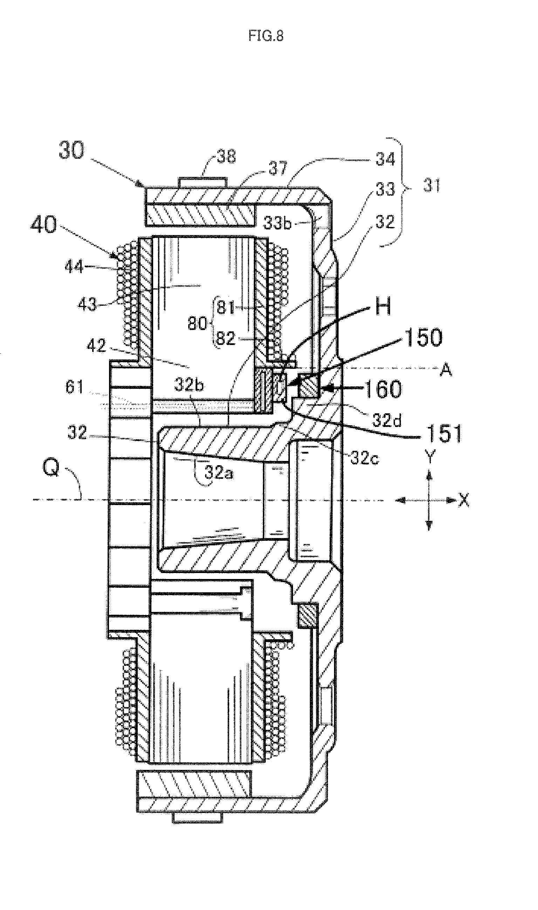

FIG. 8 illustrates a second embodiment of the present invention. This embodiment has the same configuration as that of the first embodiment described above, except for the shapes and arrangement of the magnetic sensor unit and the magnetic-sensor permanent magnet, and the like. Therefore, only points different from the first embodiment will be described. The identical points are denoted by the same reference signs, and a description thereof is omitted.

In the second embodiment, similarly to the first embodiment, a magnetic-sensor permanent magnet 160, which is fitted on the outer circumferential surface of the second large-diameter portion 32d of the boss portion 32, is arranged in contact with the bottom wall 33 of the rotor main body 31, and in this condition fixed to the rotor main body 31. The magnetic-sensor permanent magnet 160 is magnetized in the axial direction X.

Similarly to the first embodiment, the magnetic sensor unit 150 includes the Hall effect devices H provided in the sensor holder 151. The sensor holder 151 is fixed to the core part 42 of the stator 40, which is similar to the first embodiment. The Hall effect device H is arranged so as to overlap the magnetic-sensor permanent magnet 160 with respect to the axial direction X. Accordingly, the Hall effect device H is able to detect a change in magnetic fluxes caused by rotation of the magnetic-sensor permanent magnet 160.

As clear from the description given above, in this embodiment as well, the magnetic sensor unit 150 is wholly received within the space located inside the bridge-wire guide walls 82 of the insulating members 80 with respect to the radial direction Y. In other words, the magnetic sensor unit 150 is arranged such that the whole of the magnetic sensor unit 50 is completely received within the space enclosed by the bridge-wire guide walls 82 of the insulating members 80, the core part 42 of the stator 40, and the boss portion 32 and the bottom wall 33 of the rotor. That is, the magnetic sensor unit 150 is arranged such that any part thereof is not outside the bridge-wire guide walls 82 of the insulating members 80 with respect to the radial direction Y.

The magnetic sensor unit 150 is arranged in the above-described manner, and any part of the magnetic sensor unit 150 is not interposed in a gap between the outer peripheral surface of the winding 44 with respect to the axial direction X (in the right direction in FIG. 2) and the inner circumferential surface of the bottom wall 33 of the rotor 30. Accordingly, the stator 40 and the bottom wall 33 of the rotor 30 can be arranged with an interval therebetween being further reduced. Therefore, in this embodiment as well, a size reduction of the rotating electric machine in the axial direction X is achieved.

In short, the present invention makes an effective use of a space that is formed between the bridge-wire guide walls 82 and the boss portion 32 at a location inside the bridge-wire guide wall 82 with respect to the radial direction Y, thereby achieving a size reduction of the rotating electric machine with respect to the axial direction X. In the present invention, it suffices that the magnetic sensor unit 50 is arranged such that whole of the magnetic sensor unit 50, 150 is received within the space that is formed inside the bridge-wire guide walls with respect to the radial direction. Here, the expression "the space that is formed inside the bridge-wire guide walls with respect to the radial direction" does not mean a space limited to a certain range in the axial direction X that overlaps the winding 44 with respect to the radial direction Y of the rotation axis Q. It should be construed to mean the whole of a space that is inside an imaginary cylindrical surface A with respect to the radial direction Y and that extends from the core part 42 of the stator 40 to the bottom wall 33 of the rotor main body 31. Here, the imaginary cylindrical surface A passes through an end surface of the bridge-wire guide wall 82 at the rotation axis Q side.

As long as the magnetic sensor unit 50, 150 is arranged in the above-described manner, no limitation is put on the number of the magnetic-sensor permanent magnets 60, 160, the shape, the type, the arrangement position, the arrangement direction, or the like, of the magnetic-sensor permanent magnet 60, 160. Likewise, no limitation is put on the number of the magnetic sensor units 50, 150, the shape, the type, the arrangement position, the arrangement direction, or the like, of the magnetic sensor unit 50, 150.

In either of the above-described embodiments, the bottom wall 33 of the rotor main body 31 is arranged at the side opposite to the engine E (the right side in FIG. 1). The present invention is also applicable to a structure in which the bottom wall of the rotor main body is arranged at the engine E side (the left side in FIG. 1).

The present invention is suitable for use as a starter-generator mounted to an engine of a motorcycle. However, applications of the present invention are not limited to a rotating electric machine serving as this type of starter-generator. The present invention is also applicable to various types of rotating electric machines included in various types of vehicles different from the motorcycle.

It should be understood that the terms and expressions used herein are for descriptions and have no intention to be construed in a limited manner, do not eliminate any equivalents of features shown and mentioned herein, and allow various modifications falling within the claimed scope of the present invention.

While the present invention may be embodied in many different forms, a number of illustrative embodiments are described herein with the understanding that the present disclosure is to be considered as providing examples of the principles of the invention and such examples are not intended to limit the invention to preferred embodiments described herein and/or illustrated herein.

While illustrative embodiments of the invention have been described herein, the present invention is not limited to the various preferred embodiments described herein, but includes any and all embodiments having equivalent elements, modifications, omissions, combinations (e.g., of aspects across various embodiments), adaptations and/or alterations as would be appreciated by those in the art based on the present disclosure. The limitations in the claims are to be interpreted broadly based on the language employed in the claims and not limited to examples described in the present specification or during the prosecution of the application, which examples are to be construed as non-exclusive. For example, in the present disclosure, the term "preferably" is non-exclusive and means "preferably, but not limited to."

### [INDUSTRIAL APPLICABILITY]

The rotating electric machine according to the present invention is suitable for use as a starter-generator mounted to an engine of a motorcycle, for example.

### [DESCRIPTION OF THE REFERENCE SIGNS]

- 5: crankshaft
- 5a: one end portion of crankshaft
- 30: rotor
- 31: rotor main body
- 32: shaft-fixing boss portion
- 33: bottom wall
- 34: peripheral wall
- 37: field permanent magnet
- 40: stator
- 42: core part
- 42a: positioning hole
- 43: teeth
- 44: winding
- 44a: bridge-wire
- 50, 150: magnetic sensor unit
- H: magnetic sensor element (Hall effect device)
- 51: base
- 52: attachment portion
- 53: magnetic sensor element mount
- 58: positioning projection
- 60, 160: magnetic-sensor permanent magnet
- 80: insulating member
- 81: main body
- 82: bridge-wire guide wall
- E: engine
- V: vehicle (motorcycle)
- X: axial direction
- Y: radial direction
- SG: rotating electric machine (starter-generator)

## Claims

1. A rotating electric machine comprising:
a rotor main body (31) having a bottom-closed cylindrical shape, the rotor main body (31) including a bottom wall (33) having a disk-like shape, a peripheral wall (34), and a shaft-fixing boss portion (32), the bottom wall (33) being configured to rotate around a rotation axis, the peripheral wall (34) extending out from an outer circumferential edge of the bottom wall (33) in an axial direction of the rotation axis, the shaft-fixing boss portion (32) being provided in a central portion of the bottom wall (33) and being concentric with the peripheral wall (34);
a field permanent magnet (37) provided on an inner circumferential surface of the peripheral wall (34) of the rotor main body (31) in such a manner that the polarity of a magnetic pole alternates along a circumferential direction;
a stator (40) provided in the rotor main body (31);
a magnetic-sensor permanent magnet (60; 160) provided to the rotor main body (31); and
a magnetic sensor unit (50; 150) including a magnetic sensor element (H) configured to detect a change in magnetic fluxes of the magnetic-sensor permanent magnet (60; 160),
the stator (40) including a plurality of teeth (43), a plurality of windings (44), and a bridge-wire guide wall (82), the plurality of teeth (43) being arranged at regular intervals in the circumferential direction and extending from a core part (42) having a cylindrical shape in a radial direction of the rotation axis, the plurality of windings (44) being wound on the plurality of teeth (43) in the form of concentrated winding, the bridge-wire guide wall (82) extending out at the proximal side of each of the plurality of teeth (43) in the axial direction of the rotation axis, the bridge-wire guide wall (82) being configured to guide a bridge-wire of each of the plurality of windings (44),
the magnetic sensor unit (50; 150) being arranged in such a manner that the whole of the magnetic sensor unit (50; 150) is received within a space that is formed inside the bridge-wire guide wall (82) with respect to the radial direction.

2. The rotating electric machine according to claim 1, wherein
the magnetic-sensor permanent magnet (60; 160) is arranged in contact with an inner circumferential surface of the bottom wall (33).

3. A rotating electric machine according to claim 1, wherein
the magnetic-sensor permanent magnet (60; 160) is fitted to an outer circumferential surface of an end portion of the boss portion (32) located most inward at the bottom wall (33) side.

4. The rotating electric machine according to any one of claims 1 to 3, wherein
the magnetic-sensor permanent magnet (60) is magnetized in the radial direction,
the magnetic sensor element (H) is arranged so as to overlap the magnetic-sensor permanent magnet (60) with respect to the radial direction.

5. The rotating electric machine according to any one of claims 1 to 3, wherein
the magnetic-sensor permanent magnet (160) is magnetized in the axial direction,
the magnetic sensor element (H) is arranged so as to overlap the magnetic-sensor permanent magnet (160) with respect to the axial direction.

6. The rotating electric machine according to any one of claims 1 to 5, wherein the magnetic sensor unit (50) includes:
a magnetic sensor holder (54) having a base (51), an attachment portion (52), and a magnetic sensor element mount (53), the attachment portion (52) being provided integrally to both ends of the base (51), the magnetic sensor element mount (53) being provided integrally with the base (51);
a circuit board (55) arranged in the base (51); and
the magnetic sensor element (H) mounted to the magnetic sensor element mount (53).

7. The rotating electric machine according to claim 6, wherein
the magnetic sensor element (H) is arranged in a press-fitted state within the magnetic sensor element mount (53).

8. The rotating electric machine according to claim 6 or 7, wherein
the magnetic sensor unit (50; 150) is fixed to the stator (40) in such a manner that the base (51) is in direct contact with the core part (42) of the stator (40).

9. The rotating electric machine according to any one of claims 1 to 8, wherein
the magnetic sensor unit (50; 150) includes a positioning projection (58) that is formed on a core-part opposed surface of the sensor unit (50; 150),
the core part (42) of the stator (40) includes a positioning hole (42a) corresponding to the positioning projection (58),
the positioning projection (58) is fitted into the positioning hole (42a), to position the magnetic sensor unit (50; 150) relative to the core part (42).

10. The rotating electric machine according to any one of claims 6 to 9, wherein
the base (51) of the magnetic sensor unit (50) has an arc-like shape extending along the bridge-wire guide wall (82),
the magnetic sensor element mount (53) is formed so as to extend out from the base (51) in the axial direction,
three magnetic sensor elements (H) are arranged in the magnetic sensor mount (53).

11. The rotating electric machine according to any one of claims 6 to 10, wherein
the base (51) of the magnetic sensor unit (50; 150) has a slit (57) for guiding a harness (62) that is connected to the circuit board (55).

12. The rotating electric machine according to any one of claims 1 to 11, wherein
the rotor main body (31) is directly coupled to a crankshaft (5) of an engine,
the rotating electric machine is a starter-generator that functions as a starter motor of the engine for rotating the crankshaft (5) at a time of engine start, and functions as a generator configured to be rotated by the crankshaft (5) after the engine start.

13. An engine comprising the rotating electric machine according to any one of claims 1 to 12.

14. A vehicle comprising the engine according to claim 13.

15. A motorcycle comprising the engine according to claim 13.
